# EUROPEAN PATENT SPECIFICATION

(11) **EP 3 388 821 B1**
(45) Date of publication and mention of the grant of the patent: **29.03.2023**
(21) Application number: 16874726.9
(22) Date of filing: 29.11.2016
(51) Int. Cl.: G01N 21/65, G01N 21/21, G01J 3/02, G01J 3/10, G01J 3/44

(54) **SHORT-WAVELENGTH LASER-EXCITATION CHIRAL RAMAN SPECTROMETER**
CHIRALES RAMAN-SPEKTROMETER MIT KURZWELLENLÄNGEN-LASERANREGUNG
SPECTROMÈTRE DE DIFFUSION RAMAN CHIRALE À EXCITATION LASER À LONGUEUR D'ONDE COURTE

(30) Priority: 13.12.2015 CN 201510925965
(43) Date of publication of application: 17.10.2018
(73) Proprietor: Dalian Institute Of Chemical Physics, Chinese Academy Of Sciences, Liaoning 116023 (CN)
(72) Inventor: LI, Can, Dalian Liaoning 116023 (CN); FENG, Zhaochi, Dalian Liaoning 116023 (CN); WANG, Peng, Dalian Liaoning 116023 (CN); ZHANG, Ying, Dalian Liaoning 116023 (CN); TANG, Yuxuan, Dalian Liaoning 116023 (CN)
(74) Representative: Mewburn Ellis LLP
(86) International application number: PCT/CN2016/107611
(87) International publication number: WO 2017/101669

(56) References cited:
- EP-B1- 1 405 049
- CN-A- 101 806 740
- CN-A- 103 618 205
- CN-A- 104 953 463
- US-A1- 2014 240 702
- ZHU F ET AL: "Raman Optical Activity: A Tool for Protein Structure Analysis", STRUCTURE, ELSEVIER, AMSTERDAM, NL, vol. 13, no. 10, 1 October 2005 (2005-10-01), pages 1409-1419, XP027638639, ISSN: 0969-2126 [retrieved on 2005-10-01]
- BARRON L D ET AL: "Polarized raman optical activity of @b-pinene: electric quadrupole contributions", CHEMICAL PHYSICS LETTERS, ELSEVIER BV, NL, vol. 126, no. 5, 16 May 1986 (1986-05-16), pages 461-464, XP026466600, ISSN: 0009-2614, DOI: 10.1016/S0009-2614(86)80136-1 [retrieved on 1986-05-16]
- J. KILMER ET AL: "Laser sources for Raman spectroscopy", PROCEEDINGS OF SPIE MEDICAL IMAGING 1997, vol. 8039, 10 May 2011 (2011-05-10), page 803914, XP055596413, 1000 20th St. Bellingham WA 98225-6705 USA ISSN: 0277-786X, DOI: 10.1117/12.883040 ISBN: 978-1-5106-2781-9
- LI HONGGANG ED - CULLUM BRIAN M ET AL: "Development of a depolarized Raman spectrometer for potential surface-enhanced Raman optical activity (SEROA) measurements", SMART BIOMEDICAL AND PHYSIOLOGICAL SENSOR TECHNOLOGY VIII, SPIE, 1000 20TH ST. BELLINGHAM WA 98225-6705 USA, vol. 8025, no. 1, 13 May 2011 (2011-05-13) , pages 1-8, XP060016773, DOI: 10.1117/12.883748 [retrieved on 1901-01-01]
- QIU, SHI: "Raman OpticalActivity(ROA)Spectroscopic studies on Chiral Molecules", DOCTORAL DISSERTATIONS OF GRADUATE SCHOOL OF CHINESE ACADEMY OF SCIENCES, 31 October 2011 (2011-10-31), pages 1-202, XP009511608,
- LI, HONGGANG et al.: "Simultaneous acquisition of all four forms of circular polarization Raman optical activity: results for a-pinene and lysozyme", Journal of Raman Spectroscopy, vol. 43, 30 May 2011 (2011-05-30), pages 89-94, XP055392577,

## Description

### Technical field of the invention

A short-wavelength laser-excitation chiral Raman Spectrometer comprises a laser light source for providing excitation light in a wavelength between 325nm and 532nm, a linear polarized homogeneous system, a circularly polarized light converter, a sample cell holder, a circularly polarized light splitter, a Y-type double beam bifurcated optical fiber, a Rayleigh line filter, an imaging spectrograph, CCD sensitive to short-wavelength range comprising wavelengths shorter than 532nm, an acquisition system for the CCD, and a data processing system. The short-wavelength laser-excitation chiral Raman Spectrometer can be used for the Chiral Raman (Raman Optical Activity) spectra study of gaseous, liquid and solid-state chiral samples, getting information about their absolute configuration and conformation.

### Background of the invention

A Chiral Raman Spectrometer (namely Raman Optical Activity Spectrometer) determines the chiral Raman signals (Raman Optical Activity signals) by the signal differences between the sample's scattering light of the incident right and left circularly polarized radiation, or equivalently, by the difference between the right and left circularly polarized radiation in the Raman scattering light of the sample. The CID value of chiral Raman spectra which is defined as the ratio the total Raman intensity divided by the scattering intensity difference between the incident right and left circularly polarized light, is lower than 10⁻³ order. At present the commercial chiral Raman spectrometers are all adopted with 532nm excitation laser as the light source. Since the chiral Raman spectra can be easily interfered by fluorescence, and the sensitivity is too low, studies of chiral samples with low concentration are challenging. This invention applies a light source with shorter wavelength as the excitation source of the chiral Raman spectrometer. By using the characteristics that intensity of Raman scattering is proportional to the fourth power of the reciprocal of wavelength of the scattered radiation, chiral Raman signal (Raman Optical Activity signal) is proportional to the fifth power of the reciprocal of wavelength, thus normalized Raman circular intensity difference is proportional to the reciprocal of excitation wavelength, the detection sensitivities of Raman and Chiral Raman spectra are promoted. In virtue of the improved sensitivity and the avoidance of fluorescence, the promotion of short-wavelength Chiral Raman Spectrometer will advance the development of chiral Raman spectra study.

Zhu et al, Structure, 13 (10), 1409-1419 (2005) describes Raman optical activity (ROA) technique and presents spectra, recorded with a commercial instrument of novel design, of a selection of proteins to demonstrate how ROA may be used to readily distinguish between the main classes of protein structure. Barron & Escribano, Chem. Phys. Lett., 126 (5), 461-464 (1986) contains a comparison of the polarized and depolarized Raman optical activity spectra of β-pinene, obtained with an optical multichannel instrument.

Kilmer et al., Proc. SPIE Med. Imag. 8039, 803914 (1997) reports on the development of a compact, highly efficient, high power solid-state Ti: Sapphire laser suited for many Raman spectroscopic techniques. Li et al, Smart Biomed. Physiol. Sensor Technol. VIII SPIE, 8052 (1), 1-8 (2011) discusses the development of a depolarized Raman spectrometer bsed on the BioTools' Chiral/RAMAN-2X scattered circular polarization (SCP) ROA spectrometer.

### Summary of the invention

The present invention is directed to a short-wavelength laser-excitation Chiral Raman Spectrometer as defined in appended independent claim 1. Particular embodiments of the invention are defined in the appended dependent claims.

### Technical Proposal

The laser coming from the laser light source goes through the linear polarized homogeneous system then to the sample cell. The incident light is linear polarized, so scattering circular polarization (SCP) can be achieved by detecting the circular polarization component of the scattered light. Or the laser coming from laser-excitation light source goes through the linear polarized homogeneous system and the circularly polarized light converter then to the sample cell. After the circularly polarized light converter, there is a 1/2 wave plate that can be in or out of the light path. By varying the in or out state of the 1/2 wave plate, the right/left circularly polarized light can be transformed into left/right circularly polarized light, and Incident Circular Polarization (ICP) collection is realized through the detection of the scattered light, with incident light being circularly polarized. Two kinds of acquisition methods with one and the same instrument, that is, transformation between ICP and SCP realized by whether laser that comes from the laser-excitation light source goes through the circularly polarized light converter or not. The right/left circularly polarized Raman signals coming from sample cell goes through the Rayleigh line filter, then enter into the incidence end A/B of Y-type double-beam bifurcated optical fiber, divided into two beams of polarized light via circularly polarized light splitter, present as a linear array on the other end of the optical fiber, then enter on the incident slit of the imaging spectrograph.

The Raman signals are separated by the imaging spectrograph then enter the CCD on the exit of spectrograph which is sensitive in a wide range of short wavelength, and enter on the top half and the bottom of it. CCD's acquisition system collects the light signals of the top half and the bottom half, that is, the right and the left circularly polarized Raman signals, converting them into electrical signals and transmitting the electrical signals to the computer. After data processing, the sum of right and left circularly polarized Raman signals is counted as the total Raman signal, and the difference between right and left circularly polarized Raman signals as the circularly polarized Raman difference signal, that is, the Raman optical activity signal, and one acquisition is accomplished when normalized difference of circular polarization intensity is computed as the circularly polarized Raman difference signal divided by the total Raman signal. Meanwhile, by switching the working state of the circularly polarized light splitter, the entry of the right/left circularly polarized Raman signals to the A/B end of the double beam bifurcated optical fiber alternately, then the signals enter the bottom half and the top half of CCD. Via multiple accumulations of spectra of circularly polarized Raman difference, the collection of circular polarization Raman spectra (Raman Optical Activity Spectra) is accomplished.

### Advantageous effect

The advantages of the short-wavelength laser-excitation chiral Raman Spectrometer according to the present invention: This invention is applied to the studies of chiral Raman spectra namely Raman Optical Activity spectra in the wavelength range between 325nm and 532nm. To gain information about the chiral structure of chiral materials, determinate their chiral centers, determinate their absolute configuration, it plays an important role in the region of chiral catalysis, drug testing and biochemistry.

Two kinds of acquisition methods with one and the same instrument can be made, that is, transformation between ICP and SCP can be realized by whether laser light from the laser light source goes through the circularly polarized light converter or not.

### Description with pictures

The invention will be illustrated by means of the attached drawing, wherein:
Fig. 1 is a diagram of the system configuration of the short-wavelength chiral Raman Spectrometer
Fig. 2 are diagrams of Raman and ROA spectra of neat R/S-α-pinene (457nm, 50mW, 10min)
Fig. 3 are diagrams of Raman and ROA spectra of L-Alanine (1M) (532nm, 1000mW, 489min; 457nm, 200mW, 63min)
Fig. 4 are diagrams of Raman and ROA spectra of L-Proline (1M) (532nm, 800mW, 426min; 457nm, 200mW, 206min)
Fig. 5 are diagrams of Raman and ROA spectra of L-glucose (3.7M) (532nm, 800mW, 472min; 457nm, 200mW, 276min)
Fig. 6 are diagrams of Raman and ROA spectra of Lysozyme (75mg/mL) (532nm, 900mW, 360min; 457nm, 250mW, 172min)
Fig. 7 are diagrams of Raman and ROA spectra of TG4T-K+ (~mM) (532nm, 1200mW, 1000min; 457nm, 200mW, 125min)

### Specific implementation mode

### Example 1

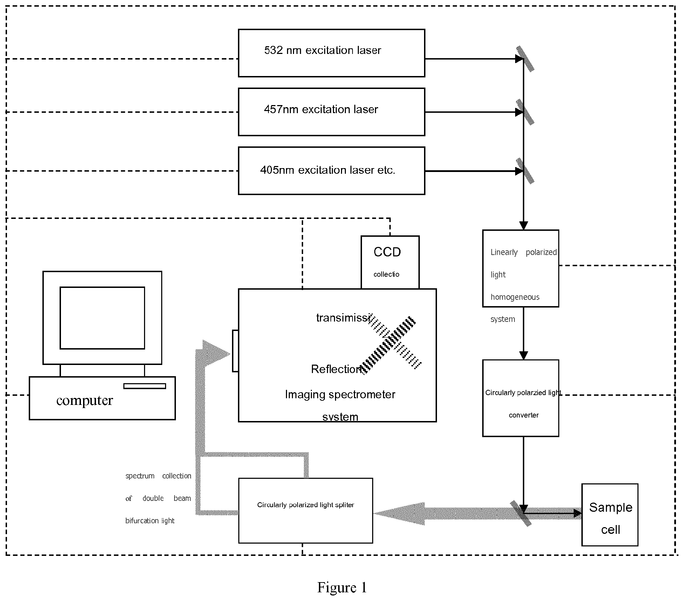

As showed in Fig1, a short-wavelength laser-excitation chiral Raman Spectrometer (A short-wavelength laser-excitation Raman Optical Activity Spectrometer) comprises a laser-excitation light source between 325nm and 532nm, the linear polarized homogeneous system, circularly polarized light converter, sample cell holder, circularly polarized light splitter, double beam bifurcated optical fiber, Rayleigh line filter, imaging spectrograph, CCD sensitive to short-wavelength range and data processing system. Excitation source mainly comprises DPSS lasers with different wavelengths. The output power is greater than 300mW for 457nm-excitation and 1000mW for 532nm-excitation. The output power and mode are steady to meet the demand for chiral Raman spectra studies.

The laser coming from laser-excitation light source goes through the linear polarized homogeneous system, and after being collimating focused, the laser becomes highly linear polarized light, calibrated by high-precision polarizing devices; The linear polarized light is converted by circularly polarized light converter, and the system working state can be switched between Incident Circular Polarization (ICP), Scattered Circular Polarization (SCP), Incident Circular Polarization (ICP), (DCPI), (DCPII), by choosing the corresponding devices (for example all types of wave plates, Liquid crystal retarder, KD*P and so on). The scattered light collected from the sample cell enters the circularly polarized light splitter, then after filtration of Raleigh line, the light is split into chiral beams according to the former choice of systems. The split light enters the bifurcated optical fiber, being guided into the imaging spectrograph. The optical grating of the spectrometer can be chose from reflection, transmission and concave. The Raman signals enter the CCD on the exit of spectrograph which is sensitive in a wide range of short wavelength, and get on the top half and the bottom of it. CCD's acquisition system collects the light signals of the top half and the bottom half, that is, the right and the left circularly polarized Raman signals, converting them into electrical signals and transmitting the electrical signals to the computer. After data processing, the sum of right and left circularly polarized Raman signals is counted as the total Raman signal, and the difference between right and left circularly polarized Raman signals as the circularly polarized Raman difference signal, that is, the Raman optical activity signal, and one acquisition is accomplished when normalized difference of circular polarization intensity is computed as the circularly polarized Raman difference signal divided by the total Raman signal. By varying the right/left circular polarization working state, the light route compensation for the circularly polarized Raman signals' differential detection can be complete, so is the cycle of circularly polarized Raman difference acquisition. Noise can be lower down by multiple uniform accumulations. All the optical elements of the whole system are wide wave band devices, which can be used to acquiring chiral Raman spectra in the range of 200nm-600nm.

All the mechanical controls, data collecting and electronic information feedbacks are computer-controlled, as imaginary lines show in Fig1.

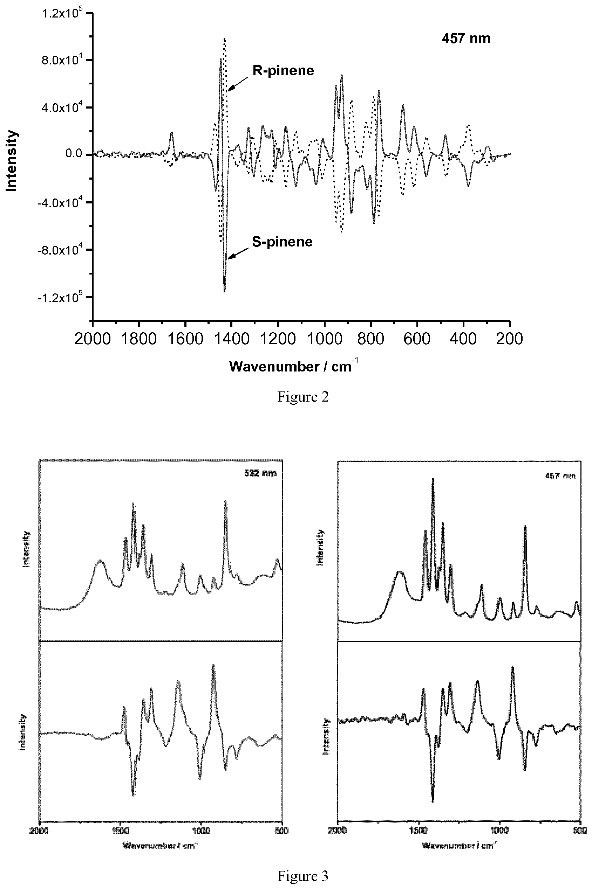

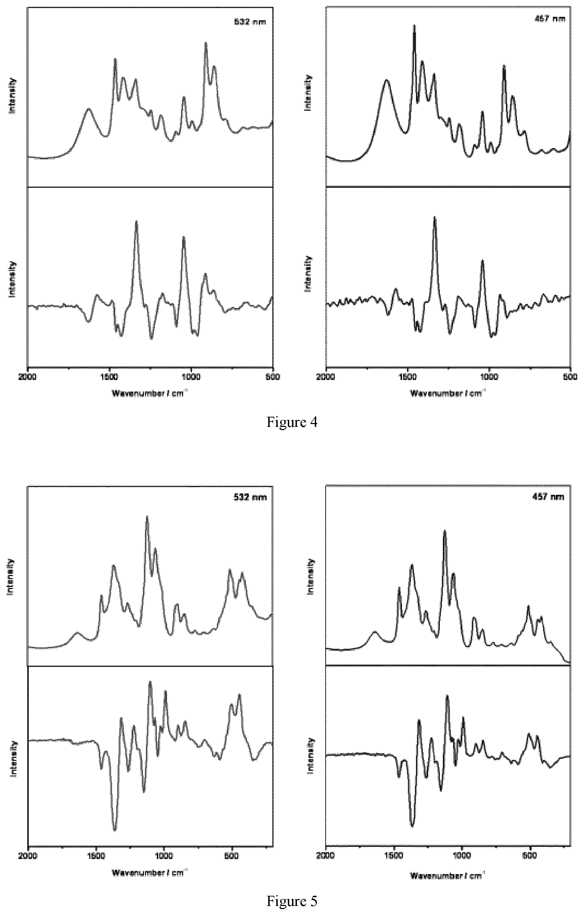

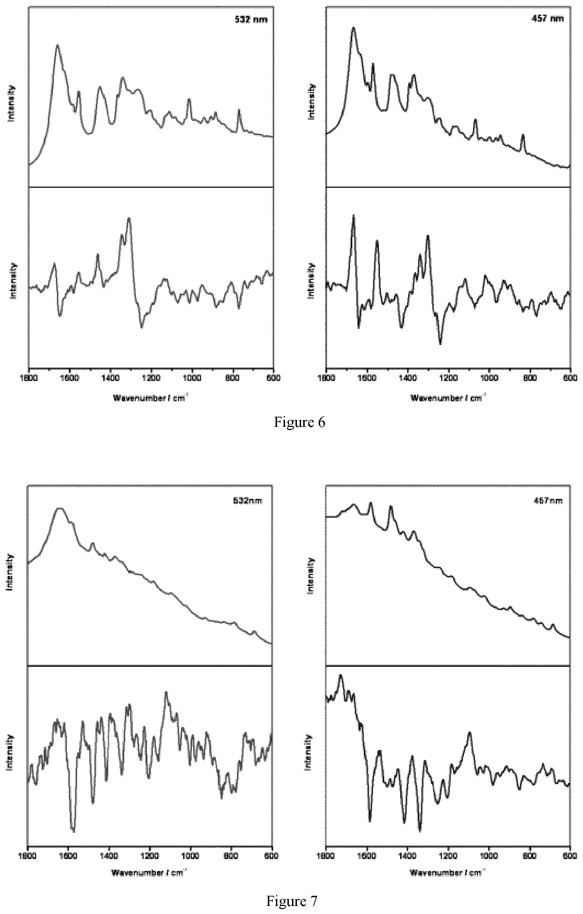

Figs. 2-7 are diagrams of Raman and ROA spectra of R/S-α-pinene, L-Alanine, L-Proline, L-glucose, Lysozyme and TG4T-K+, with great signal-to-noise ratio. Comparing the spectrograms of 457nm-ecitation and 532nm-excitation Raman and ROA, it can be noticed that when collected with short-wavelength laser-excitation chiral Raman Spectrometer, both Raman and ROA spectra' intensity are improved, with higher signal-to-noise ratio and CID ratio. From all those results, it can be concluded that short-wavelength laser-excitation chiral Raman Spectrometer have great potential and advantages in the studies of chiral materials, and is expected to play an important role in the region of chiral catalysis, drug testing and biochemistry.

## Claims

1. A short-wavelength laser-excitation Chiral Raman Spectrometer, wherein "short-wavelength" refers to the wavelength of excitation light source shorter than 532nm, comprising:
a laser light source for providing excitation light in a wavelength range between 325nm and 532nm;
a linear polarized homogeneous system arranged to collimate and polarize laser light from the laser light source;
a circularly polarized light converter which is followed by a 1/2 wave plate, the 1/2 wave plate being configured to be in a state in or out of a light path of the laser light, wherein the 1/2 wave plate follows the circularly polarized light converter along the light path of the laser light, wherein by varying the in or out state of the 1/2 wave plate, right/left circularly polarized light can be transformed into left/right circularly polarized light respectively;
a sample cell holder;
a circularly polarized light splitter;
a Y-type double beam bifurcated optical fiber;
a Rayleigh line filter;
an imaging spectrograph;
a CCD sensitive to a short-wavelength range comprising wavelengths shorter than 532nm;
an acquisition system for the CCD; and
a data processing system;
wherein the short-wavelength laser-excitation Chiral Raman spectrometer is configured such that:
either laser light from the laser light source goes through the linear polarized homogeneous system, and then to the sample cell directly to realize Scattered Circular Polarization (SCP) collection, or laser light from the laser light source goes through the linear polarized homogeneous system and the circularly polarized light converter, and
then to the sample cell to realize Incident Circular Polarization (ICP) collection, such that two kinds of acquisition methods may be performed using the short-wavelength laser-excitation Chiral Raman Spectrometer, that is, transformation between ICP and SCP may be realized by whether laser light that comes from the laser light source goes through the circularly polarized light converter or not;
the left/right circularly polarized Raman signals coming from the sample cell go through the Rayleigh line filter, then, after being divided into two beams of polarized light by the circularly polarized light splitter, and presented as a linear array on an incidence end of the Y-type double beam bifurcated optical fiber, enter into the incidence end of the Y-type double beam bifurcated optical fiber, and then enter an incident slit of the imaging spectrograph;
the Raman signals separated by the imaging spectrograph then enter the CCD, which is sensitive in a wide range of short wavelengths shorter than 532nm, on the exit of the imaging spectrograph, wherein the Raman
signals are received on the top half and the bottom of the CCD, respectively;
the CCD's acquisition system is configured to collect the right and left circularly polarized Raman light signals of the top half of the CCD and the bottom half of the CCD, convert them into electrical signals and transmit the electrical
signals to the data processing system; wherein the data processing system is configured to calculate:
a total Raman signal based on the sum of right and left circularly polarized Raman signals,
a circularly polarized Raman difference signal, that is, the Raman optical activity signal, based on the difference between right and left circularly polarized Raman, and
a normalized difference of circular polarization intensity, wherein the normalized difference of circular polarization intensity is the circularly polarized Raman difference signal divided by the total Raman signal.

2. The short-wavelength laser-excitation Chiral Raman Spectrometer of claim 1, wherein the circularly polarized light splitter comprises a 1/4 wave plate and a linear polarized light splitter sequentially arrayed along the light path of the laser light, wherein the 1/4 wave plate is realized by a liquid crystal retarder;
wherein the circularly polarized light splitter is configured such that changing a voltage applied to the 1/4 wave plate of the circularly polarized light splitter rotates the principal axes of the 1/4 wave plate through 90°, thereby realizing an alternate incidence of the right/left circularly polarized Raman signals to the incidence end of the Y-type double beam bifurcated optical fiber, then left and right circularly the polarized Raman signals enter the top half and the bottom half of the CCD, respectively, which can be used as the light route compensation for the circularly polarized Raman signals' differential detection.

3. The short-wavelength laser-excitation Chiral Raman Spectrometer of claim 1, wherein the linear polarized homogeneous system comprises an 1/2 wave plate configured to rotate along the geometric center at a constant speed, whose geometric center is located at the light path, and the 1/2 wave plate is arranged vertically to the light path of the laser light.

4. The short-wavelength laser-excitation Chiral Raman Spectrometer of claim 1, wherein the laser light source comprises a continuously adjustable laser for providing excitation light in a wavelength range between 325nm and 532nm, or multiple parallel laser excitation light sources whose excitation light wavelengths are between 325nm and 532nm;
wherein the parallel laser excitation light sources are multiple laser excitation light sources whose emergent light paths are parallel to each other, wherein the short-wavelength laser-excitation Chiral Raman Spectrometer comprises mirrors, and wherein the laser beams enter the incident light path of the linear polarized homogenous system after being reflected by the mirrors; and
wherein all of the optical elements of the short-wavelength laser-excitation Chiral Raman Spectrometer except the Rayleigh line filter can perform in the wide range of wavelength between 325nm and 532, thereby reducing the errors due to the changes of wavelength and optical elements, and realizing signal collection of the same sample through the same light path with different excitation wavelengths.

5. The short-wavelength laser-excitation Chiral Raman Spectrometer of claim 1, wherein the imaging spectrograph comprises one of:
a transmission grating imaging spectrograph, a reflection grating imaging spectrograph or a concave grating imaging spectrograph.

6. The short-wavelength laser-excitation Chiral Raman Spectrometer of claim 2,
images are configured to be formed on the top half and the bottom half of CCD to the light, which completes the route compensation for the circularly polarized Raman signals' differential detection, such that a circular acquisition of circularly polarized Raman difference signal can be achieved;
such that via multiple accumulation of spectra of circularly polarized Raman difference, the collection of circular polarization Raman spectra, that is Raman Optical Activity Spectra, is accomplished.

7. The short-wavelength laser-excitation chiral Raman Spectrometer of claim 1, wherein a continuously adjustable laser with wavelength between 325nm and 532nm is used as the laser light source; wherein
when the wavelength of the laser light source is shorter than 532nm, the interference of chiral molecules' fluorescence to the collection of Raman and chiral Raman signals is avoided;
wherein, since intensity of Raman scattering is proportional to the fourth power of the reciprocal of wavelength of the scattered radiation, chiral Raman signal, that is Raman Optical Activity signal, is proportional to the fifth power of the reciprocal of excitation wavelength, thus normalized Raman circular intensity difference is proportional to the reciprocal of excitation wavelength; hence the short-wavelength chiral Raman spectrometer can improve sensitivity of chiral Raman signals, that is Raman Optical Activity signals.

## Patentansprüche

1. Chiral-Raman-Spektrometer mit Anregung mittels Laser mit kurzer Wellenläge, wobei "kurze Wellenlänge" für die Wellenläge einer Anregungslichtquelle steht, die kleiner als 532 nm ist, umfassend:
eine Laserlichtquelle zur Bereitstellung von Anregungslicht in einem Wellenlängenbereich zwischen 325 nm und 532 nm;
ein linear polarisiertes homogenes System, das angeordnet ist, um Laserlicht von der Laserlichtquelle zu bündeln und zu polarisieren;
einen zirkular polarisierten Lichtwandler, an den eine Halbwellenplatte anschließt, wobei die Halbwellenplatte ausgelegt ist, um in einer Stellung innerhalb oder außerhalb des Lichtpfads des Laserlichts zu sein, wobei die Halbwellenplatte entlang des Lichtpfads des Laserlichts an den zirkular polarisierten Lichtwandler anschließt, wobei durch Variieren der Innerhalb- oder Außerhalb-Stellung der Halbwellenplatte rechts/links zirkular polarisiertes Licht jeweils in links/rechts zirkular polarisiertes Licht umgewandelt werden kann;
einen Probenküvettenhalter;
einen Teiler für zirkular polarisiertes Licht;
eine gegabelte Doppelstrahlfaser vom Y-Typ;
einen Rayleigh-Linienfilter;
einen Bildgebungsspektrographen;
eine CCD, die für einen Kurzwellenlängenbereich empfindlich ist, der kleiner als 532 nm ist;
ein Erfassungssystem für die CCD; und
ein Datenverarbeitungssystem;
wobei das Chiral-Raman-Spektrometer mit Anregung mittels Laser mit kurzer Wellenläge so ausgelegt ist, dass:
entweder Laserlicht von der Laserlichtquelle durch das linear polarisierte homogene System und dann direkt zur Probenküvette läuft, um eine Erfassung mittels gestreuter Zirkularpolarisation (SCP) auszuführen, oder Laserlicht von der Laserlichtquelle durch das linear polarisierte homogene System und den zirkular polarisierten Lichtwandler und dann zur Probenküvette läuft, um eine Erfassung mittels einfallender Zirkularpolarisation (ICP) auszuführen, sodass zwei Arten von Erfassungsverfahren unter Verwendung des Chiral-Raman-Spektrometers mit Anregung mittels Laser mit kurzer Wellenläge ausgeführt werden können, d. h. eine Transformation zwischen ICP und SCP kann dadurch umgesetzt werden, dass von der Laserlichtquelle kommendes Licht durch den zirkular polarisierten Lichtwandler hindurchläuft oder nicht;
die von der Probenküvette kommenden links/rechts zirkular polarisierten Raman-Signale gehen durch den Rayleigh-Linienfilter, dann, nachdem sie durch den Teiler für zirkular polarisiertes Licht in zwei Strahlen aus polarisiertem Licht geteilt wurden und als lineare Anordnung auf einem Einfallsende der gegabelten Doppelstrahlfaser vom Y-Typ präsentiert wurden, treten sie in das Einfallende der gegabelten Doppelstrahlfaser vom Y-Typ ein und treten dann in einen Eintrittsschlitz des Bildgebungsspektrographen ein;
die Raman-Signale, die durch den Bildgebungsspektrographen geteilt wurden, treten dann in die CCD ein, die für einen großen Bereich von kurzen Wellenlängen unter 532 nm empfindlich ist, nach dem Austritt aus dem Bildgebungsspektrographen; wobei die Raman-Signale auf der oberen Hälfte bzw. der Unterseite der CCD empfangen werden;
das Erfassungssystem der CCD ist ausgelegt, um die rechts und links zirkular polarisierten Raman-Lichtsignale der oberen Hälfte der CCD und der unteren Hälfte der CCD zu erfassen, sie in elektrische Signale umzuwandeln und die elektrischen Signale an das Datenverarbeitungssystem zu übertragen; wobei das Datenverarbeitungssystem ausgelegt ist, um Folgendes zu berechnen:
ein Raman-Gesamtsignal basierend auf der Summe aus den rechts und links zirkular polarisierten Raman-Signalen,
ein zirkular polarisiertes Raman-Differenzsignal, d. h. das optische Aktivitäts-Ramansignal, basierend auf der Differenz zwischen rechts und links zirkular polarisiertem Raman, und
eine normalisierte Differenz der zirkularen Polarisationsintensität, wobei die normalisierte Differenz der zirkularen Polarisationsintensität das zirkular polarisierte Raman-Differenzsignal dividiert durch das Raman-Gesamtsignal ist.

2. Chiral-Raman-Spektrometer mit Anregung mittels Laser mit kurzer Wellenläge nach Anspruch 1, wobei der Teiler für zirkular polarisiertes Licht eine Viertelwellenplatte und einen Teiler für linear polarisiertes Licht umfasst, die nacheinander entlang des Lichtpfads des Laserlichts angeordnet sind, wobei die Viertelwellenplatte durch einen Flüssigkristallverzögerer umgesetzt ist; wobei der Teiler für zirkular polarisiertes Licht so ausgelegt ist, dass ein Ändern einer an die Viertelwellenplatte angelegten Spannung des Teilers für zirkular polarisiertes Licht die Hauptachsen der Viertelwellenplatte um 90° dreht, wodurch ein alternativer Einfall der rechts/links zirkular polarisierten Raman-Signale am Einfallsende der gegabelten Doppelstrahlfaser vom Y-Typ umgesetzt wird, dann treten rechts und links zirkular polarisierte Raman-Signale in die obere Hälfte bzw. untere Hälfte der CCD ein, was als Lichtwegkompensation für die Differenzdetektion der zirkular polarisierten Raman-Signale verwendet werden kann.

3. Chiral-Raman-Spektrometer mit Anregung mittels Laser mit kurzer Wellenläge nach Anspruch 1, wobei das linear polarisierte homogene System eine Halbwellenplatte umfasst, die ausgelegt ist, um das geometrische Zentrum mit einer konstanten Geschwindigkeit zu rotieren, wobei sich das geometrische Zentrum im Lichtpfad befindet und die Halbwellenplatte vertikal zum Lichtpfad des Laserlichts angeordnet ist.

4. Chiral-Raman-Spektrometer mit Anregung mittels Laser mit kurzer Wellenläge nach Anspruch 1, wobei die Laserlichtquelle einen kontinuierlichen einstellbaren Laser zur Bereitstellung von Anregungslicht in einem Wellenlängenbereich zwischen 325 und 532 nm oder mehrere parallele Laseranregungslichtquellen umfasst, deren Anregungslichtwellenlängen zwischen 325 und 532 nm liegen;
wobei die parallelen Laseranregungslichtquellen Mehrfach-Laseranregungslichtquellen sind, deren Austrittslichtpfade parallel zueinander sind, wobei das Chiral-Raman-Spektrometer mit Anregung mittels Laser mit kurzer Wellenläge Spiegel umfasst,
und wobei die Laserstrahlen in den Einfallslichtpfad des linear polarisierten homogenen Systems eintreten, nachdem sie von den Spiegeln reflektiert wurden; und
wobei alle optischen Elemente des Chiral-Raman-Spektrometers mit Anregung mittels Laser mit kurzer Wellenläge außer dem Rayleigh-Linienfilter im weiten Bereich von Wellenlängen zwischen 325 nm und 532 nm arbeiten können, wodurch die Fehler aufgrund der Änderungen der Wellenlänge und optischen Elemente verringert werden und eine Signalerfassung der gleichen Probe durch den gleichen Lichtpfad mit unterschiedlichen Anregungsellenlängen umgesetzt wird.

5. Chiral-Raman-Spektrometer mit Anregung mittels Laser mit kurzer Wellenläge nach Anspruch 1, wobei der Bildgebungsspektrograph eines der Folgenden umfasst:
einen Transmissionsgitter-Bildgebungsspektrographen, einen Reflexionsgitter-Bildgebungsspektrographen oder einen Konkavgitter-Bildgebungsspektrographen.

6. Chiral-Raman-Spektrometer mit Anregung mittels Laser mit kurzer Wellenläge nach Anspruch 2, wobei Bilder ausgelegt sind, um in der oberen Hälfte und in der unteren Hälfte der CCD zum Licht gebildet zu werden, was den Kompensationsweg für die Differenzdetektion der zirkular polarisierten Raman-Signale vervollständigt, sodass eine zirkulare Erfassung eines zirkular polarisierten Raman-Differenzsignals erreicht werden kann;
sodass über eine vielfache Akkumulation von Spektren einer zirkular polarisierten Raman-Differenz die Erfassung von Zirkularpolarisation-Raman-Spektren, optischen Aktivitäts-Ramanspektren, erreicht wird.

7. Chiral-Raman-Spektrometer mit Anregung mittels Laser mit kurzer Wellenläge nach Anspruch 1, wobei ein kontinuierlich einstellbarer Laser mit einer Wellenlänge zwischen 325 nm und 532 nm als Laserlichtquelle verwendet wird; wobei, wenn die Wellenlänge der Laserlichtquelle kürzer ist als 532 nm, die Interferenz der Fluoreszenz von chiralen Molekülen mit der Erfassung von Raman- und chiralen Raman-Signalen vermieden wird;
wobei, da die Intensität von Raman-Streuung proportional zur vierten Potenz des Kehrwerts der Wellenläge der Streustrahlung ist, das chirale Raman-Signal, d. h. die optische Raman-Aktivität, proportional zur fünften Potenz des Kehrwerts der Anregungswellenlänge ist, wodurch die normalisierte zirkulare Raman-Intensitätsdifferenz proportional zum Kehrwert der Anregungswellenlänge ist; folglich kann ein Chiral-Raman-Spektrometer mit kurzer Wellenläge die Empfindlichkeit von chiralen Raman-Signalen, d. h. optischen Aktivitäts-Ramansignalen, verbessern.

## Revendications

1. Spectromètre de diffusion Raman chirale à excitation laser à courte longueur d'onde, dans lequel « courte longueur d'onde » se réfère à la longueur d'onde de source de lumière d'excitation inférieure à 532 nm, comprenant :
une source de lumière laser pour fournir de la lumière d'excitation dans une gamme de longueurs d'ondes comprise entre 325 nm et 532 nm ;
un système homogène à polarisation linéaire conçu pour collimater et polariser la lumière laser provenant de la source de lumière laser ;
un convertisseur de lumière à polarisation circulaire qui est suivi par une lame demi-onde, la lame demi-onde étant configurée pour être dans un état à l'entrée et à la sortie d'un chemin optique de la lumière laser, dans lequel la lame demi-onde suit le convertisseur de lumière à polarisation circulaire le long du chemin optique de la lumière laser, dans lequel en modifiant l'état à l'entrée ou à la sortie de la lame demi-onde, la lumière à polarisation circulaire droite/gauche peut être transformée respectivement en lumière à polarisation circulaire gauche/droite ;
un porte-cellule échantillon ;
un séparateur de lumière à polarisation circulaire ;
une fibre optique bifurquée à double faisceau de type Y ;
un filtre de ligne de Rayleigh ;
un spectrographe d'imagerie ;
un CCD sensible à une gamme de courtes longueurs d'ondes comprenant des longueurs d'onde inférieures à 532 nm ;
un système d'acquisition pour le CCD ; et
un système de traitement de données ;
dans lequel le spectromètre de diffusion Raman chirale à excitation laser à courte longueur d'onde est configuré de telle sorte que :
soit la lumière laser provenant de la source de lumière laser traverse le système homogène à polarisation linéaire, puis se dirige directement vers la cellule échantillon pour réaliser la collecte de polarisation circulaire diffusée (SCP), soit la lumière laser provenant de la source de lumière laser traverse le système homogène à polarisation linéaire et le convertisseur de lumière à polarisation circulaire, et se dirige ensuite vers la cellule échantillon pour réaliser la collecte de polarisation circulaire incidente (ICP), de telle sorte que deux sortes de procédés d'acquisition peuvent être effectués à l'aide du spectromètre de diffusion Raman chirale à excitation laser à courte longueur d'onde, c'est-à-dire que la transformation entre l'ICP et la SCP peut être réalisée selon que la lumière laser qui vient de la source de lumière laser traverse le convertisseur de lumière à polarisation circulaire ou non ;
les signaux Raman à polarisation circulaire gauche/droit provenant de la cellule échantillon traversent le filtre de ligne de Rayleigh, puis, après avoir été divisés en deux faisceaux de lumière polarisée par le séparateur de lumière à polarisation circulaire, et présentés sous forme d'un réseau linéaire sur une extrémité d'incidence de la fibre optique bifurquée à double faisceau de type Y, pénètrent dans l'extrémité d'incidence de la fibre optique bifurquée à double faisceau de type Y, puis pénètrent dans une fente incidente du spectrographe d'imagerie ;
les signaux Raman séparés par le spectrographe d'imagerie pénètrent ensuite dans le CCD, qui est sensible dans une large gamme de courtes longueurs d'ondes inférieures à 532 nm, sur la sortie du spectrographe d'imagerie, dans lequel les signaux Raman sont reçus sur la moitié supérieure et la partie inférieure du CCD, respectivement ;
le système d'acquisition du CCD est configuré pour collecter les signaux de lumière Raman à polarisation circulaire droit et gauche de la moitié supérieure du CCD et de la moitié inférieure du CCD, les convertir en signaux électriques et transmettre les signaux électriques au système de traitement de données ; dans lequel le système de traitement de données est configuré pour calculer :
un signal Raman total basé sur la somme des signaux Raman à polarisation circulaire droit et gauche,
un signal de différence Raman à polarisation circulaire, c'est-à-dire, le signal d'activité optique Raman, basé sur la différence entre le Raman à polarisation circulaire droit et gauche, et
une différence normalisée d'intensité de polarisation circulaire, dans lequel la différence normalisée d'intensité de polarisation circulaire est le signal de différence Raman à polarisation circulaire divisé par le signal Raman total.

2. Spectromètre de diffusion Raman chirale à excitation laser à courte longueur d'onde selon la revendication 1, dans lequel le séparateur de lumière à polarisation circulaire comprend une lame quart d'onde et un séparateur de lumière à polarisation linéaire disposés séquentiellement en réseau le long du chemin optique de la lumière laser, dans lequel la lame quart d'onde est réalisée par un retardateur à cristaux liquides ;
dans lequel le séparateur de lumière à polarisation circulaire est configuré de telle sorte que le changement d'une tension appliquée à la lame quart d'onde du séparateur de lumière à polarisation circulaire fait tourner les axes principaux de la lame quart d'onde de 90°, réalisant ainsi une incidence alternée des signaux Raman à polarisation circulaire droit/gauche sur l'extrémité d'incidence de la fibre optique bifurquée à double faisceau de type Y, puis les signaux Raman à polarisation circulaire gauche et droit pénètrent dans la moitié supérieure et la moitié inférieure du CCD, respectivement, ce qui peut être utilisé comme compensation de trajectoire lumineuse pour la détection différentielle de signaux Raman à polarisation circulaire.

3. Spectromètre de diffusion Raman chirale à excitation laser à courte longueur d'onde selon la revendication 1, dans lequel le système homogène à polarisation linéaire comprend une lame demi-onde configurée pour tourner le long du centre géométrique à une vitesse constante, dont le centre géométrique est situé au niveau du chemin optique, et la lame demi-onde est agencée verticalement par rapport au chemin optique de la lumière laser.

4. Spectromètre de diffusion Raman chirale à excitation laser à courte longueur d'onde selon la revendication 1, dans lequel la source de lumière laser comprend un laser ajustable en continu pour fournir de la lumière d'excitation dans une gamme de longueurs d'ondes comprise entre 325 nm et 532 nm, ou des sources de lumière d'excitation laser parallèles multiples dont les longueurs d'ondes de lumière d'excitation sont comprises entre 325 nm et 532 nm ;
dans lequel les sources de lumière d'excitation laser parallèles sont des sources de lumière d'excitation laser multiples dont les chemins optiques émergents sont parallèles les uns aux autres, dans lequel le spectromètre de diffusion Raman chirale à excitation laser à courte longueur d'onde comprend des miroirs,
et dans lequel les faisceaux lasers pénètrent dans le chemin optique incident du système homogène à polarisation linéaire après avoir été réfléchis par les miroirs ; et
dans lequel tous les éléments optiques du spectromètre de diffusion Raman chirale à excitation laser à courte longueur d'onde excepté le filtre de ligne de Rayleigh peuvent fonctionner dans la large gamme de longueurs d'ondes comprise entre 325 nm et 532 nm, réduisant ainsi les erreurs dues aux changements de longueur d'onde et d'éléments optiques, et réalisant la connecte de signaux du même échantillon à travers le même chemin optique avec des longueurs d'ondes d'excitation différentes.

5. Spectromètre de diffusion Raman chirale à excitation laser à courte longueur d'onde selon la revendication 1, dans lequel le spectrographe d'imagerie comprend l'un d'entre :
un spectrographe d'imagerie à grille de transmission, un spectrographe d'imagerie à grille de réflexion ou un spectrographe d'imagerie à grille concave.

6. Spectromètre de diffusion Raman chirale à excitation laser à courte longueur d'onde selon la revendication 2,
dans lequel des images sont configurées pour être formées sur la moitié supérieure et la moitié inférieure du CCD vers la lumière, ce qui achève la compensation de trajectoire pour la détection différentielle de signaux Raman à polarisation circulaire, de sorte qu'une acquisition circulaire de signal de différence Raman à polarisation circulaire peut être réalisée ;
de sorte que via l'accumulation multiple de spectres de différence Raman à polarisation circulaire, la collecte de spectres de diffusion Raman à polarisation circulaire, c'est-à-dire de spectres d'activité optique Raman, est accomplie.

7. Spectromètre de diffusion Raman chirale à excitation laser à courte longueur d'onde selon la revendication 1, dans lequel un laser ajustable en continu à longueur d'onde comprise entre 325 nm et 532 nm est utilisé comme source de lumière laser ;
dans lequel lorsque la longueur d'onde de la source de lumière laser est inférieure à 532 nm, l'interférence de fluorescence des molécules chirales sur la collecte de signaux Raman ou de diffusion Raman chirale est évitée ;
dans lequel, étant donné que l'intensité de diffusion Raman est proportionnelle à la quatrième puissance de la réciproque de longueur d'onde du rayonnement diffusé, le signal de diffusion Raman chirale, à savoir le signal d'activité optique Raman, est proportionnel à la cinquième puissance de la réciproque de longueur d'onde d'excitation, ainsi la différence d'intensité circulaire Raman normalisée est proportionnelle à la réciproque de longueur d'onde d'excitation ; par conséquent, le spectromètre de diffusion Raman chirale à courte longueur d'onde peut améliorer la sensibilité de signaux de diffusion Raman chirale, c'est-à-dire de signaux d'activité optique Raman.
